## Europäisches Patentamt

European Patent Office

Office européen des brevets

(11) Publication number: **0 078 572**
**B1**

# EUROPEAN PATENT SPECIFICATION

(45) Date of publication of patent specification: **15.05.85**

(51) Int. Cl.⁴: **C 03 B 11/08,** C 03 B 11/02

(21) Application number: **82201342.1**

(22) Date of filing: **28.10.82**

(54) **Method and apparatus for the high-precision manufacture of glass products, in particular lenses.**

(30) Priority: **29.10.81 NL 8104895**

(43) Date of publication of application:
**11.05.83 Bulletin 83/19**

(45) Publication of the grant of the patent:
**15.05.85 Bulletin 85/20**

(84) Designated Contracting States:
**DE FR GB**

(56) References cited:
**US-A-2 410 616**
**US-A-3 833 347**
**US-A-3 860 408**

(73) Proprietor: **N.V. Philips' Gloeilampenfabrieken**
**Groenewoudseweg 1**
**NL-5621 BA Eindhoven (NL)**

(72) Inventor: **Smulders, Hendricus Franciscus**
**Gerardus**
**c/o INT. OCTROOIBUREAU B.V. Prof. Holstlaan 6**
**NL-5656 AA Eindhoven (NL)**
Inventor: **Bartman, Gerrit Egbert**
**c/o INT. OCTROOIBUREAU B.V. Prof. Holstlaan 6**
**NL-5656 AA Eindhoven (NL)**

(74) Representative: **Melio, Jan Dirk et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method for the high-precision manufacture of a glass product, in particular a lens, in which a quantity of glass having a roughly measured volume greater than that of the finished product is transferred from a furnace where the quantity of glass is softened to a position between two moulds, after which the moulds are moved towards one another so that the excess glass is pressed away from between the moulds. The invention further relates to an apparatus for performing such a method, comprising two moulds which are movable with respect to one another.

A method and apparatus of this kind are disclosed in United States Patent Specification 3,306,723. According to this known method, a glass charge having a high temperature is transferred directly from the furnace to a position between the moulds. Subsequently, the moulds are closed, the excess glass being pressed away from between the moulds and the mould movement being terminated by the moulds abutting one another.

Some excess glass will then always remain between the moulds, so that the measuring of the moulded product can never satisfy very stringent requirements as regards precision.

It is an object of the invention to provide a method and apparatus whereby glass products can be manufactured to very severe requirements as regards precision and surface and which is also particularly suitable for the manufacture of aspherical lenses.

The method of the above kind is, in accordance with the invention, characterized in that said quantity of glass is provided in the form of a roughly preformed glass product supported in a product holder, the moulds and the product holder being moved at relative speeds such that both moulds simultaneously contact the roughly preformed glass product, the movement of the moulds being terminated when they are situated at a give distance from one another.

The method in accordance with the invention utilizes a roughly preformed glass product which need not have accurately defined dimensions within given limits. This preformed product is heated to the softening temperature of the glass in a furnace, after which it is arranged between two moulds which simultaneously contact the glass during their closing movement, so that the dissipation of heat to the moulds is the same on both sides.

The mould movement is ended when the moulds are situated at a given distance from one another. The excess glass will then have been pressed away to the sides from between the moulds. The basic consideration in this respect is that for a lens only the lens surfaces are critical, in particular their surface condition and their relative position. The other surfaces of the articles are not critical. Thus, in the method according to the invention, the lens surfaces are moulded at the correct relative positions on a softened preformed product. The product holder may serve as a mount for the finished product after moulding.

An apparatus of the above kind is, according to the invention, characterized in that the apparatus further comprises transport means with one or more stations for picking up a product holder in which a roughly preformed product can be first introduced into a softening furnace, and subsequently moved to a position between the moulds, between which there is provided a product displacement member which couples the product holder to the drive of at least one of the moulds so that during the movement of the moulds towards one another the moulds simultaneously contact the product, there also being provided an electric stop for terminating the mould movement when the moulds are situated at a given distance from one another.

Generally, one of the moulds will be arranged to be stationary and the softened preformed product will be introduced halfway between the moulds. Through the product displacement member, the product can be displaced at half the speed of, and in the same direction as, the moving mould, so that both moulds simultaneously contact the product.

The final position of the moulds is determined by an electric stop which is preset so that the force on the product to be moulded is zero when the electric stop indicates zero; this can be achieved with a very high accuracy due to the absence of resultant forces. Because the moulds are not closed in the final position, the forces in the product will be small when this position is approached so that the final dimensional accuracy will be higher. The absence of said forces is due to the fact that there is no counter force other than the viscous resistance of the softened glass.

In order to ensure a high precision for the moulding apparatus, one of the moulds in one embodiment is rigidly mounted in a frame, the other mould being carried by an arm which is pivotably connected to said frame by pivots comprising pre-loaded bearings. Thus, a very rigid moulding apparatus without any play is obtained.

In order to enable correction of any very small errors in the alignment of the moulds, the pivots in a further embodiment are mounted on two parallel plates which are formed with U-shaped slots around the pivots. A certain local flexibility in the plates is thus obtained, so that the pivots are adjustable.

In order to ensure that temperature differences cannot lead to undesirable displacements in this construction, each of the moulds in a further embodiment is connected to said plates by way of a triangular system of tubes, each of the systems of tubes comprising an inlet and outlet for cooling medium.

An embodiment of the invention will be described in detail hereinafter with reference to the drawings.

Figure 1 is a diagrammatic side elevation of an embodiment of a moulding apparatus according to the invention for the manufacture of glass products.

Figures 2 and 3 are sectional views of the apparatus shown in Figure 1, taken along the lines II—II and III—III, respectively, in Figure 1.

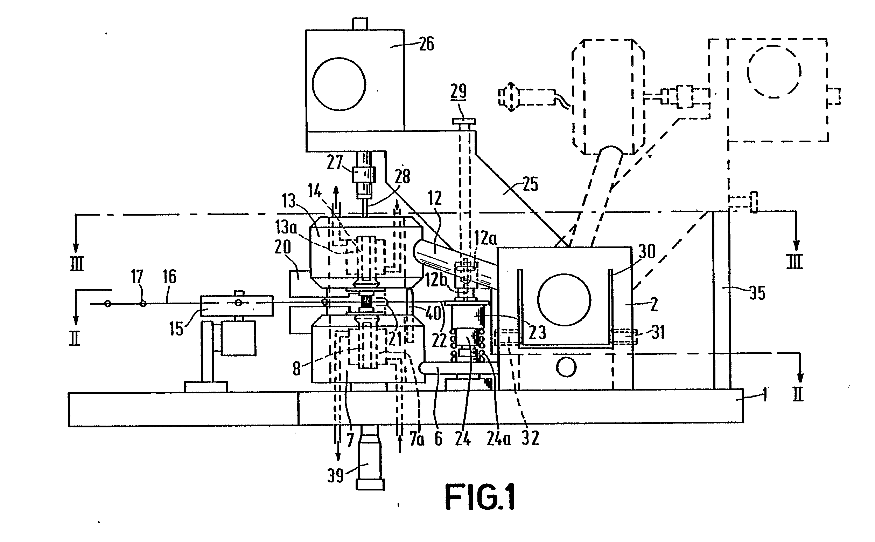

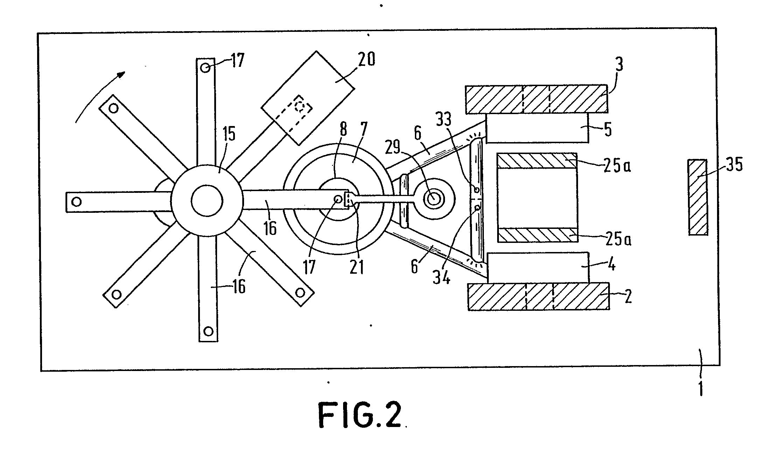

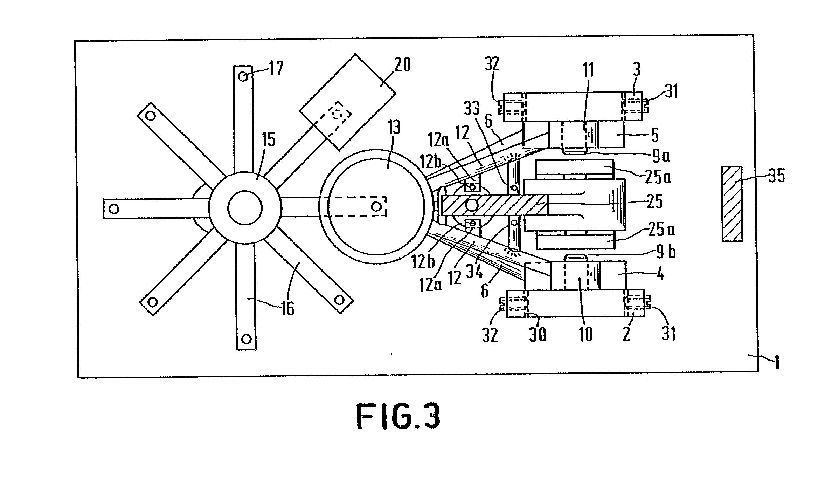

The reference numeral 1 in the Figures 1, 2 and 3 denotes a base plate. On the base plate there are arranged two parallel upright plates 2 and 3. A system of tubes 6 is connected at one end to the plates 2 and 3 *via* two blocks 4 and 5. The other end of the system of tubes 6 is connected to a mould holder 7 which carries a lower mould 8. The plates 2 and 3 carry trennions 9a and 9b on which a system of tubes forming an arm is pivotably journalled by way of pre-loaded ball bearings 10 and 11. The system of tubes 12 supports a mould holder 13 in which an upper mould 14 is accommodated.

The apparatus further comprises a rotary table 15 with a number of radially projecting arms 16, each of which carries a product holder 17. The rotary table can be intermittently moved by a drive (not shown). During this movement, each product holder passes through a number of stations, at one of which is situated a furnace 20 in which a roughly preformed glass product supported in the product holder is softened. At the next station the softened product is located between the moulds 8 and 14. In this station, the distal end of the relevant arm 16 is situated between the grippers 21 of a product displacement member 22. The member 22 is connected to a part 23 which is movably arranged on a vertical guide 24 on the base plate 1 and which is pressed upwards by a spring 24a.

An arm 25 is pivotably journalled between supports 25a. The arm 25 supports a drive unit 26 which incorporates a motor and which is capable of moving a press rod 27 substantially vertically up and down. The press rod 27 is connected to the mould holder 13 *via* leaf springs 28. The arm 25 carries a blocking member 29 which can be connected to the guide 24 in such a manner that the distance between the member 29 and the guide 24 can be adjusted.

In this embodiment of the moulding apparatus, the part 23 is arranged halfway between the centre line of the mould and a plane containing the axes of the pins 9a and 9b. Furthermore, the system of tubes 12 comprises lugs 12a in which there are mounted adjusting screws 12b which are engageable with the part 23. Thus, when the moulds are being closed from the instant at which the adjusting screws 12b engage the part 23 the part 23 moves with the mould 14 at half the speed of the mould.

It is very important that the vertical centre lines of the moulds 8 and 14 are in exact alignment. Regardless of the precision of the manufacture of the various parts there will always be some tolerances, which may give rise to deviations of the centre lines of the moulds 8 and 14 for exact alignment. In order to permit correction for such a deviation, the plates 2 and 3 are each provided with a U-shaped slot 30 around the respective trennion 9a or 9b. A certain flexibility is thus imparted to the parts of the plates lying within the slots, and by means of adjusting screws 31 and 32 the trennions 9a and 9b can be adjusted slightly in directions transverse to their longitudinal axes so that the centre line of the upper mould 14 can be adjusted in the horizontal direction.

In order to minimize temperature influences, the system of tubes 6 and 12 each comprise connections 33 and 34 for the inlet and outlet respectively of a cooling liquid. The mould holders 7 and 13 also comprise cooling circuits 7a and 13a, respectively, for the cooling of the moulds 8 and 14.

In order to permit adaptation of the position of the lower mould holder 7 to different product heights there is provided an adjustment device 39. For exchanging the moulds 8 and 14, the moulding apparatus can be opened in the manner denoted by broken lines in Figure 1. The arm 25 then bears against an abutment 35 on the base plate.

The operation of this apparatus is as follows. Roughly preformed products are arranged in the product holders 17. The rotary table 15 moves the product holders in succession to the furnace 20 in which the preformed products are heated to the softening temperature of the glass. Subsequently, each product holder, with the product, is transferred from the furnace to a position between the moulds 8 and 14, the respective arm 16 then being positioned at its distal end between the grippers 21 of the product displacement member 22. Subsequently, the drive unit 26 starts to move the mould holder 13 downwards. At the instant at which the adjusting screws 12b engage the part 23 to which the product displacement member 22 is connected the product is situated exactly halfway between the moulds through the product displacement member 22 the product subsequently moves with the upper mould 14 at half the speed thereof, which means that the two moulds will engage the product at exactly the same instant.

An electric stop, usually an inductive distance indicator 40, ensures that the moulds are relatively displaced until they reach the desired position.

## Claims

1. A method for the high-precision manufacture of a glass product, in particular a lens, in which a quantity of glass having a roughly measured volume greater than that of the finished product is transferred from a furnace where the quantity of glass is softened to a position between two moulds, after which the moulds are moved towards one another so that the excess glass is pressed away from between the moulds, characterized in that said quantity of glass is provided in the form of a roughly preformed glass product supported in a product holder, the moulds and the product holder being moved at relative speeds such that both moulds simultaneously contact the roughly preformed glass product, the movement of the moulds being terminated when they are situated at a given distance from one another.

2. An apparatus for performing the method claimed in Claim 1, comprising two moulds which are movable with respect to one another, characterized in that the apparatus further comprises transport means with one or more stations for picking up a product holder in which a roughly preformed product can be first introduced into a softening furnace and subsequently moved to a position between the moulds, between which there is provided a product displacement member which couples the product holder to the drive of at least one of the moulds such that during the movement of the moulds towards one another the moulds simultaneously contact the product, there also being provided an electric stop for terminating the mould movement when the moulds are situated at a given distance from one another.

3. An apparatus as claimed in Claim 2, characterized in that one of the moulds is rigidly mounted in a frame, the other mould being carried by an arm which is pivotably connected to said frame by pivots comprising pre-loaded bearings.

4. An apparatus as claimed in Claim 3, characterized in that the pivots are mounted on two parallel plates which are formed with U-shaped slots around the pivots.

5. An apparatus as claimed in Claim 4, characterized in that each of the moulds is connected to the plates by way of a triangular system of tubes, each of the systems of tubes comprising an inlet and an outlet for cooling liquid.

## Patentansprüche

1. Verfahren für die Hochpräzisionsherstellung eines Glasproduktes, insbesondere einer Linse, wobei eine grob abgemessene Glasmenge, die grösser ist als das Volumen des Enderzeugnisses, aus einem Ofen, in dem die Glasmenge erweicht wurde, in eine Lage zwischen zwei Matrizen gebracht wird, wonach die Matrizen aufeinander zu bewegt werden, so dass das überflüssige Glas zwischen den zwei Matrizen weggepresst wird, dadurch gekennzeichnet, dass die Glasmenge in Form eines grob vorgeformten Glasproduktes in einer Halterung zugeliefert wird, wobei die Matrizen und die halterung mit einer derartigen gegenseitigen Geschwindigkeit bewegt werden, dass die beiden matrizen gleichzeitig das grob vorgeformte Glasprodukt berühren, wobei die Bewegung der Matrizen beendet wird, wenn sie in einem bestimmten Abstand voneinander sind.

2. Vorrichtung zum Durchführen des Verfahrens nach Anspruch 1, mit zwei gegeneinander beweglichen Matrizen, dadurch gekennzeichnet, dass die Vorrichtung ausserdem Transportmittel aufweist mit einer oder mehreren Stationen zum Aufnehmen einer Produkthalterung, in der ein grob vorgeformtes Produkt zunächst in einen Erweichungsofen eingeführt und danach in eine Lange zwischen den Matrizen gebracht wird, wobei zwischen den Matrizen ein Produktführungsglied vorhanden ist, das die Produkthalterung mit dem Antrieb mindestens einer der Matrizen derart kuppelt, dass die Matrizen bei ihrer Bewegung aufeinander zu das Produkt gleichzeitig berühren, wobei ausserdem ein elektrischer Anschlag vorgesehen ist, um die Matrizenbewegung zu beenden, wenn die Matrizen sich in einem bestimmten Abstand voneinander befinden.

3. Vorrichtung nach Anspruch 2, dadurch gekennzeichnet, dass eine der Matrizen in einem Rahmen ortsfest angeordnet ist und die andere Matrize von einem Arm getragen wird, der mit dem genannten Rahmen durch Gelenkpunkte mit vorbelasteten Lagern verbunden ist.

4. Vorrichtung nach Anspruch 3, dadurch gekennzeichnet, dass die Gelenkpunkte auf zwei parallelen Platten angeordnet sind, die mit U-förmigen Schlitzen um die Gelenkpunkte gebildet sind.

5. Vorrichtung nach Anspruch 4, dadurch gekennzeichnet, dass jede der Matrizen durch ein dreieckförmiges Rohrsystem mit dem Platten verbunden ist, wobei jedes Rohrsystem einen Einlass und Auslass für Kühlflüssigkeit aufweist.

## Revendications

1. Procédé permettant de réaliser avec une précision élevée un produit en verre, notamment une lentille, selon lequel une quantité de verre présentant un volume grossièrement mesuré supérieur à celui du produit fini est transmise à partir d'un four où la quantité de verre est ramollie vers une position située entre deux moules après quoi les moules sont rapprochés, l'un de l'autre, de façon à enlever par pressage le verre excédentaire se trouvant entre les moules, caractérisé en ce que ladite quantité de verre est fournie sous forme d'un produit de verre grossièrement préformé supporté dans un porte-produit, les moules et le porte-produit étant déplacés à des vitesses relatives telles que les deux moules entrent simultanément en contact avec le produit en verre grossièrement préformé, le déplacement des moules étant terminé, lorsque ces derniers se situent à une distance déterminée l'un de l'autre.

2. Appareil permettant la mise en oeuvre du prcédé selon la revendication 1, comportant deux moules qui peuvent être déplacés l'un par rapport à l'autre, caractérisé en ce que l'appareil comporte en outre des moyens de transport présentant un ou plusieurs postes pour la prise d'un porte-produit, dans lequel un produit grossièrement préformé peut être introduit d'abord dans un four de ramollissement et ensuite dans une position située entre les moules, entre lesquels est présent un organe de déplacement de produit assurant l'accouplement du porte-produit à l'entraînement d'au moins l'un des moules de façon que, lors du déplacement des moules, l'un vers l'autre, les moules entrent simultanément en contact avec le produit, un arrêt électrique étant présent pour terminer le déplacement d'un moule lorsque les moules se situent à une distance déterminée l'un de l'autre.

3. Appareil selon la revendication 2, caractérisé en ce que l'un des moules est montée rigidement dans un châssis, l'autre étant inséré dans un bras monté de façon à pouvoir pivoter par rapport audit châssis par des pivots comportant des paliers préalablement chargés.

4. Appareil selon la revendication 3, caractérisé en ce que les pivots sont montés sur deux plaques parallèles qui sont munies de fentes en forme de U ménagées autour de pivots.

5. Appareil selon la revendication 4, caractérisé en ce que chacun des moules est relié aux plaques à l'aide d'un système triangulaire du tube, chacun des systèmes de tubes comportant une admission et une évacuation pour du liquide de refroidissement.

FIG.1

0 078 572

**FIG.2**

0 078 572

FIG.3

0 078 572